# EUROPÄISCHE PATENTSCHRIFT

(11) **EP 3 234 395 B1**
(45) Veröffentlichungstag und Bekanntmachung des Hinweises auf die Patenterteilung: **26.12.2018**
(21) Anmeldenummer: 15797321.5
(22) Anmeldetag: 19.11.2015
(51) Int. Cl.: F16D 25/061

(54) **KLAUENKUPPLUNG**
JAW CLUTCH
ACCOUPLEMENT À GRIFFES

(30) Priorität: 19.12.2014 DE 102014226611
(43) Veröffentlichungstag der Anmeldung: 25.10.2017
(73) Patentinhaber: ZF Friedrichshafen AG, 88046 Friedrichshafen (DE)
(72) Erfinder: DOEPFERT, Hagen, 88131 Lindau (DE); BAYER, Oliver, 88131 Lindau (DE); TIESLER, Peter, 88074 Meckenbeuren (DE); STIER, Harald, 88285 Bodnegg (DE)
(86) Internationale Anmeldenummer: PCT/EP2015/077029
(87) Internationale Veröffentlichungsnummer: WO 2016/096311

(56) Entgegenhaltungen:
- EP-A1- 2 438 320
- DE-A1-102011 077 748
- DE-A1-102011 082 818
- US-A- 5 667 330

## Beschreibung

Die Erfindung betrifft eine Klauenkupplung mit einem axial feststehenden Kupplungsteil und einem axial beweglichen Kupplungsteil.

Formschlüssig wirkende Klauenkupplungen werden beispielsweise in automatisierten Schaltgetrieben eingesetzt. Um möglichst schnelle und komfortable Schaltvorgänge zu ermöglichen, ist es notwendig, dass während eines Schaltvorgangs einer Getriebesteuerung der Eingriffsstatus der jeweiligen Klauenkupplung übermittelt wird. Hierzu kann ein Positionssensor genutzt werden, welcher eine Endposition eines axial beweglichen Teils der Klauenkupplung feststellt und die Information darüber an die Getriebesteuerung weiterleitet.

So ist aus der DE 10 2012 202 496 A1 ist eine Koppeleinrichtung mit einer Antriebsseite und einer Abtriebsseite bekannt, welche über ein formschlüssiges Schaltelement und ein reibschlüssiges Schaltelement miteinander kraftschlüssig verbindbar sowie wieder trennbar sind. Eine zugehörige Aktuatoreinrichtung verfügt über mindestens eine mit einem Druckmedium beaufschlagbare Kolben-Zylinder-Einheit zur sukzessiven Betätigung des formschlüssigen und des reibschlüssigen Schaltelements. Am Zylinder ist ein als Reed-Kontakt aufgebauter Sensor vorgesehen, mittels dem die axiale Endlage des Kolbens erfassbar und damit zugleich der aktuelle Schaltzustand der Klauenkupplung ermittelbar ist. Die von diesem Sensor gelieferten Positionsdaten können beispielsweise an eine Getriebesteuerung weitergeleitet und darin weiter verarbeitet werden, um insbesondere die Schaltvorgänge zu optimieren. Ein Nachteil bei dieser vorbekannten Ausführungsform ist darin zu sehen, dass mittels des Sensors nur die axiale Endlage des Kolbens erkennbar ist, so dass der Getriebesteuerung lediglich eine digitale Information darüber vorliegt, ob die Kupplung geöffnet oder geschlossen ist. Hierdurch ergeben sich vergleichsweise lange Reaktionszeiten der Getriebesteuerung bei einer nicht eindeutigen Positionsbestimmung des Betätigungskolbens.

Aus der DE 10 2009 056 088 A1 ist ferner eine Differentialgetriebeanordnung und eine Antriebsanordnung mit einer solchen Differentialgetriebeanordnung bekannt. Die Differentialgetriebeanordnung umfasst unter anderem eine Schaltkupplung, die zwischen einem Antriebsrad und dem Differentialgetriebe angeordnet ist. In einem eingerückten Zustand der Schaltkupplung wird das Drehmoment von dem Antriebsrad auf das Differentialgetriebe übertragen, während in einem ausgerückten Zustand der Schaltkupplung die Drehmomentübertragung ausgesetzt ist. Darüber hinaus beinhaltet die Differentialgetriebeanordnung einen Aktuator für die Betätigung der Schaltkupplung sowie einen Sensor zur Ermittlung von zumindest drei Schaltstellungen der Schaltkupplung, welcher mit einem in einer Ausführungsform ringscheibenförmigen Geberelement zusammenwirkt. Ein Nachteil dieser Ausführungsform liegt darin, dass der Sensor und das Geberelement außerhalb der Schaltkupplung beziehungsweise außerhalb der Differentialgetriebeanordnung angebracht sind, so dass diese nachteiligen, die Messgenauigkeit beeinträchtigenden Umgebungseinflüssen ausgesetzt sind. Aus der DE 10 2011 082818 A1 ist eine weitere Klauenkupplung mit den Merkmalen des Oberbegriffes des Anspruches 1 bekannt

Vor diesem Hintergrund liegt der Erfindung die Aufgabe zugrunde, eine Klauenkupplung vorzustellen, bei der eine stufenlose sowie hinreichend genaue Erfassung der jeweils aktuellen Stellwegposition des axial beweglichen Teil der Klauenkupplung möglich ist, und die zugleich kostengünstig in der Herstellung sowie Platz sparend aufgebaut ist.

Diese Aufgabe wird durch eine Klauenkupplung mit den Merkmalen des Anspruchs 1 gelöst. Vorteilhafte Weiterbildungen sind in den Unteransprüchen definiert.

Demnach wird zur Lösung der gestellten Aufgabe eine Klauenkupplung mit einem axial feststehenden Kupplungsteil und einem axial beweglichen Kupplungsteil vorgeschlagen, bei welcher das axial feststehende Kupplungsteil sowie das axial bewegliche Kupplungsteil hülsenförmig ausgebildet sowie koaxial zueinander angeordnet sind, bei welcher das axial bewegliche Kupplungsteil zum Herstellen einer formschlüssigen Verbindung mit dem axial feststehenden Kupplungsteil mittels eines druckmittelbetätigbaren Kolbens axial verschiebbar ist, bei welcher der Kolben längsverschieblich in einem Zylindergehäuse angeordnet ist, welches radial außen das axial bewegliche Kupplungsteil trägt, bei welcher der Kolben über einen Kolbenbolzen mit dem axial beweglichen Kupplungsteil verbunden ist, und bei welcher dem Zylinderraum des Zylindergehäuses über einen Zufuhrkanal ein Druckmittel zuführbar ist, wobei der Kolben an einem axialen Ende mit einem koaxial ausgerichteten Sensorbolzen fest verbunden ist, und der Sensorbolzen im Bereich seines freien, kolbenfernen axialen Endes an einem Sensorabschnitt als Geberelement für einen Positionssensor ausgebildet ist.

Bei dieser Klauenkupplung lässt sich die Position des beweglichen Kupplungsteils über den gesamten Kupplungsweg messtechnisch präzise erfassen, so dass nicht nur die Endpositionen des axial bewegbaren Kupplungsteils sondern auch Zwischenpositionen genau ermittelbar sind. Die Kenntnis dieser Positionsinformation ermöglicht es beispielsweise einer Getriebesteuerung eines automatisierten Schaltgetriebes, bei einem Gangwechsel präzise gesteuerte Schaltvorgänge durchzuführen. Dies ist insbesondere bei der Auflösung von in bestimmten Betriebssituationen vorkommenden Zahn-auf-Zahn-Stellungen der beiden Kupplungsteile besonders vorteilhaft.

Den zu messenden Positionen des axial bewegbaren Kupplungsteils kann jeweils ein Kupplungsweg zugeordnet werden, welcher diejenige axiale Wegstrecke beziehungsweise den Abstand zwischen den zwei formschlüssig miteinander in Eingriff bringbaren Kupplungsteilen oder mindestens eines anderen, sich entsprechend mitbewegenden Bauteils angibt, die zum Übergang zwischen dem vollständig eingerückten und dem komplett ausgerückten Zustand der Klauenkupplung und umgekehrt zurückzulegen ist.

Bei einer vorteilhaften Weiterbildung der beschriebenen Klauenkupplung ist vorgesehen, dass der Kolben rotationssymmetrisch um seine Längsmittenachse eine topfförmige Kolbenausnehmung aufweist, dass in der Kolbenausnehmung ein Befestigungsabschnitt des Sensorbolzens angeordnet ist, dass der Kolben im Bereich der Kolbenausnehmung eine radiale Querbohrung sowie der Befestigungsabschnitt des Sensorbolzens eine radiale Querbohrungen aufweisen, die koaxial zueinander sowie senkrecht zur Längsmittenachse ausgerichtet sind, und dass der Kolben, der Sensorbolzen sowie das axial bewegliche Kupplungsteil durch den Kolbenbolzen miteinander verbunden sind, indem der Kolbenbolzen in die genannten radialen Querbohrungen eingesteckt und mit dem axial beweglichen Kupplungsteil verbunden ist. Hierdurch verbindet der Kolbenbolzen insgesamt drei Bauteile fest, jedoch lösbar miteinander, so dass die Herstellung und Montage der Klauenkupplung erleichtert sind.

Ein etwaiges radiales Spiel zwischen der Kolbenausnehmung und dem zugeordneten Befestigungsabschnitt des Sensorbolzens ist so bemessen, dass auch bei maximalem Radialversatz ein Verklemmen beziehungsweise ein Verkippen des Sensorbolzens im Kolben sicher ausgeschlossen ist. Alternativ dazu können der Sensorbolzen und der Kolben als ein einziges Bauteil ausgebildet sein.

Gemäß einer anderen Weiterbildung kann vorteilhaft vorgesehen sein, dass der Positionssensor und der Sensorabschnitt des Sensorbolzens derart ausgebildet sowie zueinander angeordnet sind, dass die jeweilige Axialposition des kolbenfernen axialen Endes des Sensorbolzens und damit indirekt die axiale Position des Kolbens sowie des axial beweglichen Kupplungsteils stufenlos messbar sind. Demnach sind die Bauart des Positionssensors und der Sensorabschnitt des Sensorbolzens aufeinander abgestimmt ausgewählt beziehungsweise ausgebildet, und zwar derartig, dass nicht nur die Endpositionen des Stellweges sondern auch dazwischen liegende Positionen mit guter Genauigkeit ermittelbar sind.

Bei einer dazu konkreteren Ausführungsform ist vorgesehen, dass der Sensorabschnitt des Sensorbolzens eine geometrisch von einer Zylindermantelfläche abweichende Geometrie aufweist, derart, dass der Abstand zwischen dem Sensor und dem Sensorabschnitt des Sensorbolzens in Abhängigkeit von der jeweiligen Axialposition des Sensorbolzens unterschiedlich ist. Hierbei kann vorgesehen sein, dass der Sensorabschnitt des Sensorbolzens als eine umlaufende, im Längsschnitt weitgehend V-nutförmige Ausnehmung ausgebildet ist. Es ist jedoch auch möglich, dass die Ausnehmung lediglich axial einseitig rampenförmig ausgebildet ist. Die Ausnehmung am Sensorabschnitt erstreckt sich bevorzugt über eine Strecke, welche zumindest gleich lang ist wie der maximale Stellweg des axial beweglichen Kupplungsteils.

Gemäß einer anderen Ausgestaltung ist der Befestigungsabschnitt des Kolbens mittels eines Dichtelements gegenüber der Kolbenausnehmung abgedichtet. Hierdurch wird der Zylinderraum druckdicht gehalten und ein Abströmen des Druckmittels in andere Getriebebereiche vermieden. Als Dichtelement kommt bevorzugt ein O-Ring zum Einsatz.

Entsprechend einer weiteren günstigen Ausführungsform ist vorgesehen, dass das Zylindergehäuse fest mit einem Druckmittelzufuhrflansch verbunden oder mit diesem einstückig ausgebildet ist, und dass ein zylindrischer Lagerabschnitt des Sensorbolzens in einer Führungsbohrung dieses Druckmittelzufuhrflansches längsverschieblich aufgenommen ist. Hierdurch ist eine verlässliche Lagerung und Führung des Sensorbolzens innerhalb der Betätigungsvorrichtung der Klauenkupplung gegeben.

Gemäß einer weiteren vorteilhaften Ausgestaltung ist vorgesehen, dass in die Führungsbohrung eine Hülse eingesetzt ist, welche an einer Schulter der Führungsbohrung des Druckmittelzufuhrflansches axial anliegt, und dass der Lagerabschnitt des Sensorbolzens in der Hülse aufgenommen ist. Hierdurch ist die Hülse im Druckmittelzufuhrflansch zuverlässig fixiert und zudem ist eine leichtgängige axiale Beweglichkeit in der Lagerung des Sensorbolzens garantiert. Die Hülse ist beispielsweise aus einem reibungsarmen Kunststoff gebildet, etwa aus einem gummiartigen Elastomer. Der Lagerabschnitt des Sensorbolzens überlappt in allen axialen Lagen die axialen Enden der Hülse, um ein Eingraben desselben zu vermeiden.

Bei einer dazu alternativen Ausführungsform ist der Lagerabschnitt des Sensorbolzens längsverschieblich in der Führungsbohrung aufgenommen, und der Lagerabschnitt ist zumindest bereichsweise mit einem reibungsarmen Material versehen. Hierdurch kann auf die Hülse als ein separates Bauteil verzichtet werden, wodurch sich eine Minimierung der Herstellungs- und Montagekosten ergibt.

Gemäß einer weiteren Ausgestaltung ist vorgesehen, dass der Befestigungsabschnitt und der Lagerabschnitt des Sensorbolzens über einen zylindrischen Verbindungsabschnitt mit reduziertem Durchmesser miteinander verbunden sind. Hierdurch ist die zu bewegende Masse des Sensorbolzens im Vergleich zu einer Variante ohne Durchmesserreduzierung verringert und damit die mit gleicher Stellkraft erreichbare Stellbeschleunigung der Klauenkupplung als Ganzes erhöht. Ferner ergibt sich eine Materialersparnis, was unter anderem zu einer Verringerung der Fertigungskosten führen kann. Die Durchmesser von Befestigungsabschnitt und Lagerabschnitt des Sensorbolzens sind in etwa gleich.

Entsprechend einer weiteren Ausgestaltung ist vorgesehen, dass der Zufuhrkanal im Druckmittelzufuhrflansch zumindest abschnittweise unter einem Winkel geneigt zu einer gemeinsamen Längsmittenachse von Kolben und Sensorbolzen verläuft sowie tangential in die Führungsbohrung einmündet. Infolge der tangentialen Heranführung des Druckmittels wird zunächst die vom Druckmittelstrom hervorgerufene und auf den Sensorbolzen einwirkende Radialkraft reduziert. Alternativ dazu kann auch eine Prallkontur oder ein Leitblech innerhalb des Druckmittelzufuhrflansches vorgesehen sein, um den Strom des Druckmittels in Richtung zu dem Kolben so an den Sensorbolzen heranzuführen, dass dieser keiner nennenswerten Radialkraft ausgesetzt ist.

Bevorzugt ist vorgesehen, dass der Druckmittelzufuhrflansch mit einer Getriebegehäusewand druckdicht verbunden ist. Die Verbindung erfolgt bevorzugt mittels Verschraubung. Hierdurch ist eine druckdichte Halterung des Druckmittelzufuhrflansches an der Getriebegehäusewand erreicht.

Hinsichtlich der konkreten Anordnung des Positionssensor kann vorgesehen sein, dass dieser im Bereich der Getriebegehäusewand sowie radial oberhalb des Sensorabschnitts des Sensorbolzens angeordnet ist, wobei die Längsmittenachse des Positionssensors unter einem Anstellwinkel von 30° bis zu 90° zur gemeinsamen Längsmittenachse des Sensorbolzens und des Kolbens verläuft. Hierdurch kann der für die Integration des Positionssensors in die Getriebegehäusewand notwendige Einbauraum gering gehalten werden. Der Positionssensor ist dazu beispielsweise in eine Aussparung in der Getriebegehäusewand eingesetzt.

Gemäß einer anderen Weiterbildung ist vorgesehen, dass in der Getriebegehäusewand zentrisch zur gemeinsamen Längsmittenachse von Sensorbolzen und Kolben ein topfförmiger sowie an die Führungsbohrung anschließender Zusatzraum ausgebildet ist, in welchen das axiale, kolbenferne Ende des Sensorbolzens mit Abstand zu den Wänden des Zusatzraumes teilweise hineinragt. Durch diesen Aufbau kann das Druckmittel auch bei tiefen Betriebstemperaturen zum Ausrücken der Klauenkupplung, also beim Axialverschieben des Sensorbolzens in Richtung zu dem Zusatzraum, zuverlässig aus dem Druckmittelzufuhrflansch abfließen, so dass sich stets eine einwandfreie Kupplungsfunktion ergibt.

Entsprechend einer weiteren Ausgestaltung ist vorgesehen, dass der Sensorbolzen an seinem freien axialen Ende eine Abflachung aufweist und/oder der Befestigungsabschnitt des Sensorbolzens an seinem kolbenseitigen Ende eine Einführschräge aufweist. Hierdurch wird unter anderem die Montage des Sensorbolzens vereinfacht.

Schließlich kann vorgesehen sein, dass der Zufuhrkanal im Druckmittelzufuhrflansch mit einem peripheren Anschlusskanal in der Getriebegehäusewand verbunden ist. Durch den peripheren Anschlusskanal kann der Klauenkupplung das Druckmittel von außen, insbesondere aus anderen Bereichen eines automatischen Getriebes, zugeführt werden.

Durch die Nutzung von Hydrauliköl als Druckmittel kann das bewegliche Kupplungsteil im Vergleich zu der Nutzung eines gasförmigen Druckmittels mit einer wesentlich höheren Kraft betätigt werden, so dass ein zuverlässiges Ein- und Ausrücken der Klauenkupplung unter allen Einsatzbedingungen möglich ist.

Zum besseren Verständnis der Erfindung ist der Beschreibung eine Zeichnung eines Ausführungsbeispiels beigefügt. In dieser weisen gleiche konstruktive Komponenten jeweils dieselben Bezugsziffern auf. In der Zeichnung zeigt
- Fig. 1: einen Längsschnitt durch die Klauenkupplung im geöffneten Zustand,
- Fig. 2: einen Längsschnitt durch die Klauenkupplung im geschlossenen Zustand, und
- Fig. 3: eine axiale Rückansicht eines Druckmittelzufuhrflansches der Klauenkupplung gemäß den Figuren 1 und 2.

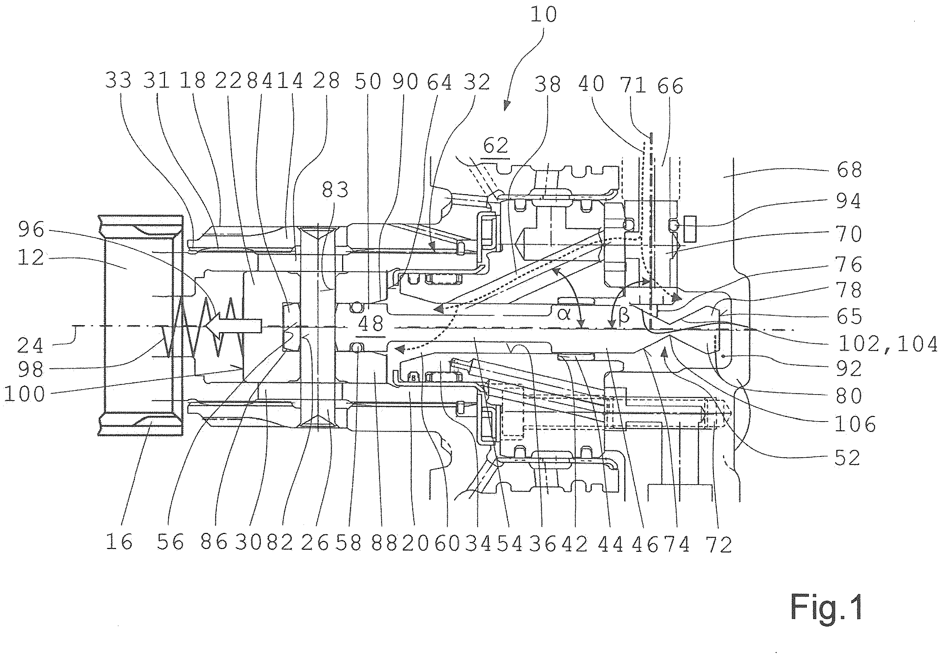

Die in den Figuren 1 bis 3 gezeigte Klauenkupplung 10 weist ein feststehendes Kupplungsteil 12 und ein axial bewegliches Kupplungsteil 14 auf. Die beiden Kupplungsteile 12, 14 sind jeweils im Wesentlichen hohlzylindrisch ausgebildet, wobei das feststehende Kupplungsteil 12 eine axiale Innenverzahnung 16 und das bewegliche Kupplungsteil 14 eine axiale Außenverzahnung 18 aufweist, deren Zähne in die Zahnlücken der jeweils anderen Verzahnung passen. Die beiden Kupplungsteile 12, 14 sind zueinander koaxial angeordnet, so dass das im Durchmesser kleinere, bewegliche Kupplungsteil 14 in axialer Richtung teilweise in das feststehende Kupplungsteil 12 einschiebbar ist. Hierdurch entsteht eine formschlüssige Verbindung, die eine Drehmomentübertragung zwischen beiden Kupplungsteilen 12, 14 ermöglicht.

Zur Betätigung der Klauenkupplung 10 verfügt diese ferner über ein in etwa hohlzylindrisches Zylindergehäuse 20, in dem ein topfartiger Kolben 22 koaxial zu deren Längsmittenachse 24 verschiebbar aufgenommen ist. Das bewegliche Kupplungsteil 14 ist radial über dem Zylindergehäuse 20 angeordnet und auf diesem koaxial zur Längsmittenachse 24 verschiebbar. Der Kolben 22 und das Zylindergehäuse 20 bilden einen druckmittelbetätigten Aktor zum Verschieben des beweglichen Kupplungsteils 14. Dazu ist der Kolben 22 mittels eines quer zur Längsmittenachse 24 verlaufenden Kolbenbolzens 26 mit dem beweglichen Kupplungsteil 14 verbunden.

Um die axiale Verschiebbarkeit des beweglichen Kupplungsteils 14 sowie die Verbindung desselben mit dem Kolben 22 mittels des Kolbenbolzens 26 zu ermöglichen, sind in dem Zylindergehäuse 20 zwei Langlöcher 28, 30 ausgebildet, die diametral zueinander in Bezug zur Längsmittenachse 24 im Zylindergehäuse 20 ausgebildet sind. An dem Zylindergehäuse 20 ist eine Außenlängsverzahnung 31 und an dem beweglichen Kupplungsteil 14 eine Innenaxialverzahnung 33 geringer Eingriffstiefe zur Führung und Verdrehsicherung des beweglichen Kupplungsteils 14 ausgebildet, wobei die Verdrehsicherung zusätzlich durch die beiden Langlöcher 28, 30 im Zylindergehäuse 20 und den durch diese geführten Kolbenbolzen 26 gewährleistet ist.

Im Bereich eines kolbenfernen hohlzylindrischen Endabschnitts 32 des Zylindergehäuses 20 ist an diesem ein im Wesentlichen hohlzylindrischer Druckmittelzufuhrflansch 34 angeordnet, der rotationssymmetrisch zur Längsmittenachse 24 ausgebildet ist. In dem Druckmittelzufuhrflansch 34 verläuft zentrisch zur Längsmittenachse 24 eine durchgehende Führungsbohrung 36, in welche ein in diesem Ausführungsbeispiel unter einem Anstellwinkel a von etwa 22,5° geneigt zur Längsmittenachse 24 verlaufender Zufuhrkanal 38 für ein Druckmittel 40 einmündet. Bei dem eingesetzten Druckmittel 40 handelt es sich bevorzugt um ein Hydrauliköl geeigneter Viskosität.

In der Führungsbohrung 36 ist eine kreisförmige Schulter 42 ausgebildet, an der eine hohlzylindrische Hülse 44 axial anliegt. In der Hülse 44 ist parallel zur Längsmittenachse 24 verschiebbar ein zylindrischer Lagerabschnitt 46 eines Sensorbolzens 48 aufgenommen. Unabhängig von der jeweiligen Axialposition des Sensorbolzens 48 umgreift die Hülse 44 als Gleitlager stets dessen Lagerabschnitt 46, um einen übermäßigen Verschleiß zu verhindern.

Die Hülse 44 ist bevorzugt aus einem reibungsarmen Kunststoff hergestellt, beispielsweise aus einem gummiartigen Elastomer oder dergleichen, während der Sensorbolzen 48 und der Druckmittelzufuhrflansch 34 aus einem Stahl gefertigt sind.

Der Sensorbolzen 48 weist an seinem dem Kolben 22 zugewandten Ende einen Befestigungsabschnitt 50 und im Bereich seines freien axialen Endes 78 einen Sensorabschnitt 52 auf. Der Befestigungsabschnitt 50 und der Lagerabschnitt 46 sind durch einen Verbindungsabschnitt 54 mit reduziertem Durchmesser miteinander verbunden. Die Hülse 44 und die Schulter 42 in der Führungsbohrung 36 im Druckmittelzufuhrflansch 34 können entfallen, sofern bei einer alternativen Ausführungsform der Lagerabschnitt 46 des Sensorbolzens 48 selbst zumindest bereichsweise mit einem reibungsarmen Material beschichtet ist.

Der im Wesentlichen zylindrische Befestigungsabschnitt 50 des Sensorbolzens 48 ist in einer topfförmigen Kolbenausnehmung 56 des Kolbens 22 aufgenommen und ist mittels des Kolbenbolzens 26 zugleich mit dem Kolben 22 und mit dem beweglichen Kupplungsteil 14 verbunden. Zwischen der Kolbenausnehmung 56 und dem Befestigungsabschnitt 50 des Sensorbolzens 48 ist ein Dichtelement 58 angeordnet, das hier als ein in eine Kolbennut eingesetzter O-Ring ausgebildet ist.

Durch das kolbenseitige Dichtelement 58 erfolgt die Abdichtung zwischen einem Zylinderraum 60 des Zylindergehäuses 20 und angrenzenden Bereichen eines nicht näher dargestellten, beispielsweise automatisierten Schaltgetriebes 62. Darüber hinaus schafft das Dichtelement 58 infolge seiner hydraulischen Abdichtungswirkung zwei Druckflächen 64, 65 am Kolben 22 sowie am kolbenfernen Ende 78 des Sensorbolzens 48. Die Druckfläche 64 am Kolben 22 weist eine kreisringförmige Geometrie auf, während die Druckfläche 65 am kolbenfernen Ende 78 des Sensorbolzens 48 kreisförmig ausgebildet ist. Die bei einer Beaufschlagung des Kolbens 22 und des Sensorbolzens 48 mit einem Druckmittel hinsichtlich einer Betätigungskraft hydraulisch wirksamen Gesamtfläche ergibt sich daher aus der Summe beider Druckflächen 64, 65, so dass eine mittels des Kolbens 22 erzeugbare Betätigungskraft der Klauenkupplung 10 durch das Vorhandensein des Sensorbolzens 48 nicht beeinträchtigt ist.

Ein radiales Spiel zwischen der Kolbenausnehmung 56 und dem Befestigungsabschnitt 50 des Sensorbolzens 48 ist so bemessen, dass auch bei einem maximalen Radialversatz ein Verklemmen ausgeschlossen ist. Ebenso besteht auch zwischen dem Kolbenbolzen 26 und dem Befestigungsabschnitt 50 des Sensorbolzens 48 ein so großes Spiel, dass auch im Fall eines maximalen Radialversatzes ein Verklemmen zuverlässig ausgeschlossen ist.

Der unter dem Winkel α geneigte Zufuhrkanal 38 im Druckmittelzufuhrflansch 34 steht mit einem quer zur Längsmittenachse 24 verlaufenden Anschlusskanal 66 im Bereich einer Getriebegehäusewand 68 in Strömungsverbindung. Über den Anschlusskanal 66 erfolgt die Versorgung der genannten Kolben-Zylinder-Anordnung der Klauenkupplung 10 mit dem betriebsnotwendigen Druckmittel 40 ausgehend von einer peripheren Druckmittelquelle.

In einer nicht in den Figuren dargestellten Ausführungsvariante kann die Druckmittelzuführung in den Druckmittelzufuhrflansch 34 unter Entfall des geneigten Zufuhrkanals 38 auch axial erfolgen, wobei jedoch eine metallische Abdichtung zwischen dem Druckmittelzufuhrflansch 34 und der Getriebegehäusewand 68 notwendig wäre, die über den gesamten Einsatztemperaturbereich der Klauenkupplung 10 hinweg wirksam sein muss. In diesem Zusammenhang müssen insbesondere unterschiedliche Wärmeausdehnungskoeffizienten der Getriebegehäusewand 68 und des Druckmittelzufuhrflansches 34 berücksichtigt werden, da der Druckmittelzufuhrflansch 34 in der Regel aus einer Stahllegierung gefertigt ist, während die Getriebegehäusewand 68 vorzugsweise aus einer Aluminiumlegierung besteht.

Oberhalb des Sensorabschnitts 52 des Sensorbolzens 48 ist ein zylindrischer Positionssensor 70 angeordnet. Die Längsmittenachse 71 des Positionssensors 70 verläuft unter einem Anstellwinkel β zur Längsmittenachse 24, wobei für den Anstellwinkel β hier lediglich exemplarisch ein Wert von 90° gewählt ist. Eine geneigte Einbaulage des Sensors 70 unter einem Anstellwinkel β von 30° bis 90° ist möglich, um insbesondere beengten Einbauraumverhältnissen besser Rechnung tragen zu können.

Lediglich der Vollständigkeit halber sei an dieser Stelle erwähnt, dass der Druckmittelzufuhrflansch 34 mittels innenseitigen Bolzen 72 mit der Getriebegehäusewand 68 verschraubt ist.

Der Positionssensor 70 kann auf seiner dem Sensorabschnitt 52 zugewandten Seite eine Oberflächengeometrie aufweisen, die näherungsweise der Oberflächengeometrie eines Halbzylinders entspricht, wodurch sich eine optimale Anpassung des Positionssensors 70 an die Querschnittsgeometrie des Sensorabschnitts 52 ergibt. Die Querschnittsgeometrie des Sensorabschnitts 52 des Sensorbolzens 48 entlang der Längsmittenachse 24 entspricht hierbei jeweils Kreisflächen unterschiedlichen Durchmessers.

Der Sensorabschnitt 52 verfügt hier exemplarisch über eine umlaufende, im Längsschnitt betrachtet V-förmige Ausnehmung 74. Mittels des Positionssensors 70 ist somit ein vertikaler Abstand 76 zwischen der Ausnehmung 74 und dem Positionssensor 70 erfassbar. Verschiebt sich der Sensorbolzen 48 und mit ihm sein Sensorabschnitt 52 koaxial zur Längsmittenachse 24, so verändert sich auch der Abstand 76 jeweils proportional zum Verschiebeweg in einer eindeutig auswertbaren Weise. Hieraus lässt sich mittels einer geeigneten Auswerteelektronik der axiale Verschiebeweg des Sensorbolzens 48 und damit die Axialposition des Kolbens 22 sowie des beweglichen Kupplungsteils 14 mit hoher Präzision stufenlos erfassen. Demzufolge ist einer Getriebesteuerung jederzeit die genaue Axialposition des beweglichen Kupplungsteils 14 bekannt, so dass Schaltvorgänge beziehungsweise Gangwechsel innerhalb des automatischen Getriebes 62 optimal durchgeführt werden können. Abweichend von der V-förmigen Gestalt der Ausnehmung 74 kann diese anders konturiert sein, solange eine eindeutige Bestimmung der Axialposition des Sensorbolzens 48 gegeben ist.

Das freie axiale Ende 78 des Sensorbolzens 48 verfügt über eine beidseitig ausgebildete Abflachung 80 als Angriffsfläche für ein Werkzeug, um bei einer Montage das Verdrehen des Sensorbolzens 48 um seine Längsmittenachse 24 zu erleichtern. Hierdurch wird bei der Montage der Klauenkupplung 10 insbesondere die Ausrichtung der Querbohrung 82 im Befestigungsabschnitt 50 des Sensorbolzens 48 für das Durchstecken des Kolbenbolzens 26 durch die Querbohrung 82 des Sensorbolzens 48 sowie durch eine Querbohrung 83 im Kolben 22 vereinfacht. Im zusammengebauten Zustand ist der Sensorbolzen 48 durch die Verbindung mit dem Kolbenbolzen 26 beziehungsweise mit dem beweglichen Kupplungsteil 14 gegen ein Verdrehen um die Längsmittenachse 24 gesichert.

Darüber hinaus verfügt der Befestigungsabschnitt 50 des Sensorbolzens 48 an seinem der Kolbenausnehmung 56 zugewandten Ende 84 über eine umlaufende, fasenartige Einführschräge 86, um das Einbringen des Befestigungsabschnitts 50 des Sensorbolzens 48 in die topfförmige Kolbenausnehmung 56 des Kolbens 22 bei der Montage der Klauenkupplung 10 zu erleichtern. Zum gleichen Zweck ist am offenen Ende 88 des Kolbens 22 radial innen gleichfalls eine geneigte Einführschräge 90 ausgebildet.

In der Getriebegehäusewand 68 ist darüber hinaus ein topfförmiger Zusatzraum 92 zur Staudruckminderung ausgebildet, der zentrisch zur gemeinsamen Längsmittenachse 24 angeordnet ist, und zwar in der Weise, dass dieser Zusatzraum 92 eine axiale Fortsetzung der Führungsbohrung 36 darstellt. Außerdem ist der Zusatzraum 92 strömungstechnisch mit dem Anschlusskanal 66 verbunden. Hierdurch kann das durch gepunktete Pfeile dargestellte flüssige Druckmittel 40 auch bei tiefen Temperaturen hinreichend schnell in oder aus den Zylinderraum 60 und den Zusatzraum 92 fließen, so dass eine einwandfreie Kupplungsfunktionalität gegeben ist.

Die im Zusammenwirken mit dem Lagerabschnitt 46 des Sensorbolzens 48 ein Gleitlager bildende Hülse 44 ist in axialer Richtung möglichst nah am Positionssensor 70 angeordnet, um den Einfluss eines gegebenenfalls vorhandenen Radialspiels zwischen der Hülse 44 und dem Lagerabschnitt 46, welches zu einer Beeinträchtigung der Messgenauigkeit des Abstands 76 führen könnte, zu minimieren, und zugleich eine Hebelwirkung des Sensorbolzens 48 bei möglichen Taumelbewegungen zu unterdrücken.

Der Positionssensor 70 ist bevorzugt als ein berührungslos wirkender Hall-Sensor ausgeführt und durch ein weiteres Dichtelement 94, hier in der Form eines O-Rings oder dergleichen, gegenüber der Getriebegehäusewand 68 abgedichtet.

In der in Fig.1 gezeigten Betätigungsstellung befindet sich die Klauenkupplung 10 im ausgerückten Zustand, so dass zwischen der Außenverzahnung 18 des axial verschiebbaren Kupplungsteils 14 und der Innenverzahnung 16 des axial feststehenden Kupplungsteils 12 keine formschlüssige Verbindung besteht und daher zwischen den beiden Kupplungsteilen 12, 14 keine Drehmomentübertragung erfolgen kann. Um die Klauenkupplung 10 ausgehend von der in Fig. 1 dargestellten Stellung in den eingerückten, also geschlossenen Zustand zu schalten, strömt das Druckmittel 40 ausgehend vom Anschlusskanal 66 über den Zufuhrkanal 38 (wie mit den punktierten Pfeillinien angedeutet) in den Zylinderraum 60 des Zylindergehäuses 20 sowie in die Führungsbohrung 36 und in den topfförmigen Zusatzraum 92. Dabei wird das Druckmittel 40 in diese Räume gepresst beziehungsweise bereits darin befindliches Druckmittel 40 wird mit einem Überdruck beaufschlagt.

Aufgrund der Druckwirkung des Druckmittels 40 auf die beiden Druckflächen 64, 65 am Kolben 22 und an den kolbenfernen axialen Ende 78 des Sensorkolbens 48 bewegt sich der Kolben 22 innerhalb des Zylindergehäuses 20 in Richtung des ersten Pfeils 96 gemäß Fig. 1 parallel zur Längsmittenachse 24 nach links. Bei dieser axialen Stellbewegung nimmt der Kolben 22 mittels des Kolbenbolzens 26 zugleich das axial verschiebbare Kupplungsteil 14 und den Sensorbolzen 48 mit. Infolge dessen verschiebt sich das bewegliche Kupplungsteil 14 in Richtung des feststehenden Kupplungsteils 12 und die Ausnehmung 74 des Sensorabschnitts 52 des Sensorbolzens 48 bewegt sich unter dem Positionssensor 70 hindurch, wodurch eine hochgenaue Bestimmung der jeweils aktuellen Axialposition des Sensorbolzens 48 und damit einhergehend die Bestimmung der Axialposition des beweglichen Kupplungsteils 14 möglich ist.

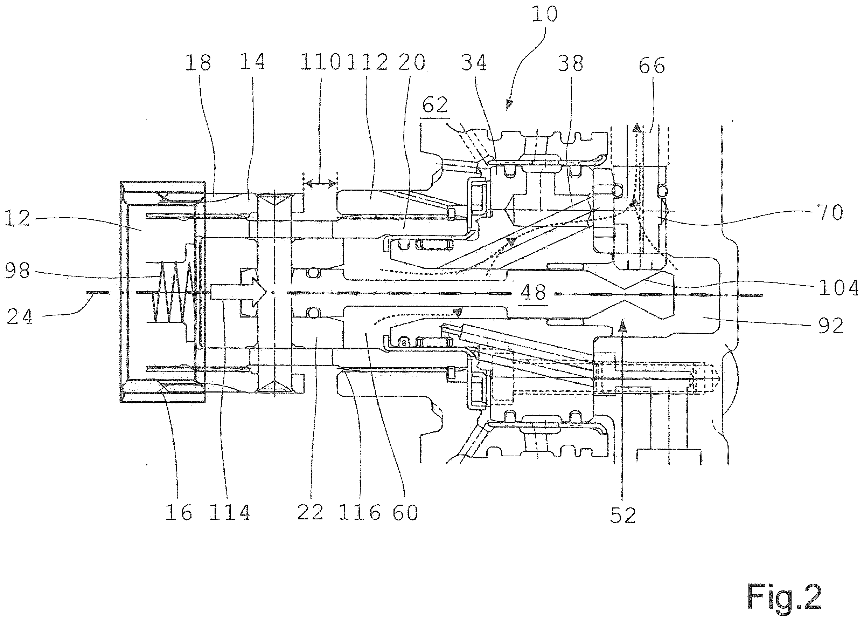

Diese axiale Stellbewegung des druckmittelbetätigten Kolbens 22 setzt sich so lange fort, bis die in Fig. 2 gezeigte Stellung der Klauenkupplung 10 erreicht ist, in der die formschlüssige Verbindung zwischen der Außenverzahnung 18 des beweglichen Kupplungsteils 14 und der Innenverzahnung 16 des feststehenden Kupplungsteils 12 hergestellt ist und eine Drehmomentübertragung zwischen beiden Kupplungsteilen 12, 14 erfolgen kann.

Die axiale Stellbewegung kann zum Beispiel entgegen der Kraftwirkung einer hier lediglich exemplarisch eingezeichneten Druckfeder 98 erfolgen, um eine selbsttätige Rückstellbewegung des Kolbens 22 bei drucklosem Zylinderraum 60 und drucklosem Zusatzraum 92 zum Öffnen der Klauenkupplung 10 zu ermöglichen. Alternativ dazu kann beispielsweise eine sensorkolbenferne axiale Außenfläche 100 des Kolbens 22 bei drucklosem Zylinderraum 60 und drucklosem Zusatzraum 92 mit dem Druckmittel 40 beaufschlagt werden, um die Rückstellbewegung des Kolbens 22 zum Öffnen der Klauenkupplung 10 durchzuführen.

Die umlaufende V-förmige Ausnehmung 74 im Sensorabschnitt 52 des Sensorbolzens 48 weist zwei axial aneinander anschließende, umlaufende Abschnitte 102, 104 auf, wobei der erste Abschnitt 102 definitionsgemäß eine negative Steigung und der zweite Abschnitt 104 eine positive Steigung aufweist. Die entgegengesetzt geneigten Abschnitte 102, 104 der Ausnehmung 74 des Sensorabschnitts 52 bilden eine Oberflächengeometrie aus, die der von zwei im Bereich ihrer verjüngten Enden aneinander stoßenden Kegelstümpfen entspricht. Durch diese spezielle Oberflächengeometrie der Ausnehmung 74 wird erreicht, dass ausgehend von der in Fig. 1 gezeigten Axialposition des Sensorbolzens 48 bis zum Erreichen der in Fig. 2 dargestellten Stellung des Sensorbolzens 48 der genannte Abstand 76 infolge der axialen Stellbewegung des Sensorbolzens 48 zunächst zunimmt, und sich der Abstand 76 nach dem Passieren einer umlaufenden Basis 106 der Ausnehmung 74, welche zugleich den Übergang zwischen beiden Abschnitten 102, 104 markiert, wieder verkleinert. Hierdurch ist eine eindeutige Bestimmung der axialen Position des Sensorbolzens 48 und damit des damit verbundenen beweglichen Kupplungsteils 14 möglich. Im Vergleich zu einer beispielsweise einfachen, im Längsschnitt des Sensorbolzens 48 dreieckförmigen Ausnehmung ergibt sich bei der zuvor beschriebenen Ausführungsform der Vorteil, dass bei einer V-förmigen Ausnehmung 74 für den gleichen maximalen axialen Messweg eine geringere Tiefe in radialer Richtung im Sensorbolzen 48 notwendig ist, was zu einer reduzierten Materialschwächung des Sensorbolzens 48 führt.

Fig. 2 zeigt einen Längsschnitt durch die Klauenkupplung der Fig. 1, jedoch im vollständig eingerückten Zustand derselben. In dem in Fig. 2 gezeigten Schaltzustand hat sich das bewegliche Kupplungsteil 14 ausgehend von seiner Axialposition in Fig. 1 soweit in Richtung zum axial feststehenden Kupplungsteil 12 bewegt, dass die Außenverzahnung 18 des axial beweglichen Kupplungsteils 14 vollständig im Eingriff mit der Innenverzahnung 16 des axial stationären Kupplungsteils 12 ist. Dadurch besteht eine formschlüssige Verbindung zwischen beiden Kupplungsteilen 12, 14 und eine Drehmomentübertragung kann erfolgen. Der Zylinderraum 60 des Zylindergehäuses 20 ist einschließlich des Zusatzraums 92 ausgehend von dem Anschlusskanal 66 und dem Zufuhrkanal 38 vollständig mit dem noch unter Überdruck stehenden Druckmittel 40 angefüllt, so dass der Kolben 22 entgegen der Kraftwirkung der Druckfeder 98 die eingezeichnete Stellung einnimmt, in welcher sich die Klauenkupplung 10 im geschlossenen Zustand befindet und in dieser Stellung zunächst auch verharrt.

Um diese vollständig eingerückte Stellung der Klauenkupplung 10 zu erreichen, muss das bewegliche Kupplungsteil 14 beziehungsweise der Kolben 22 einen axialen Kupplungsweg 110 zurücklegen, der hier beispielhaft zwischen dem axial bewegbaren Kupplungsteil 14 und einem, das Zylindergehäuse 20 hülsenförmig umschließenden Bauteil 112 des Getriebes 62 eingezeichnet ist. Das genannte Bauteil 112 weist erkennbar eine axiale Innenverzahnung 116 auf, in die eine nicht weiter bezeichnete Außenaxialverzahnung des Zylindergehäuse 20 drehfest und axial gesichert eingesteckt ist. In der dargestellten eingerückten Stellung der Klauenkupplung 10 befindet sich der eine positive Steigung aufweisende zweite Abschnitt 104 der Ausnehmung 74 des Sensorabschnitts 52 des Sensorbolzens 48 radial unter dem Positionssensor 70 und damit in dessen messtechnischen Erfassungsbereich.

Ausgehend von der in Fig. 2 gezeigten vollständig eingerückten Stellung der Klauenkupplung 10 kann sich der Kolben 22 dann, wenn der Zylinderraum 60 und der Zusatzraum 92 drucklos geworden sind und/oder das Druckmittel 40 zumindest teilweise aus diesem über den Zufuhrkanal 38 und den Anschlusskanal 66 abgeflossen ist, aufgrund der Kraftwirkung der Druckfeder 98 oder eines anderen Wirkmechanismus soweit in Richtung eines zweiten Pfeils 114 zurück verschieben, bis der in Fig. 1 gezeigte komplett ausgekuppelte bzw. ausgerückte Zustand der Klauenkupplung 10 wieder erreicht ist.

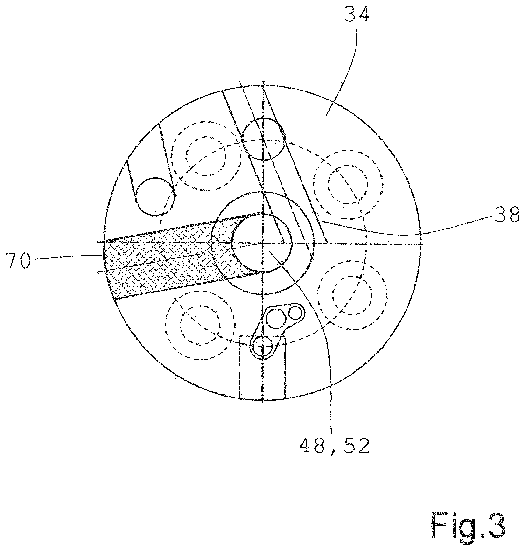

Fig. 3 zeigt eine schematische axiale Rückansicht des Druckmittelzufuhrflansches 34. Dargestellt ist hierbei, dass der Zufuhrkanal 38 innerhalb des Druckmittelzufuhrflansches 34 tangential zur Längserstreckung des Sensorbolzens 48 verläuft, um Radialkräfte auf diesen infolge des Druckmittelstroms zu vermindern. Darüber hinaus ist in Fig. 3 die Lage des Positionssensors 70 in Bezug zum Sensorabschnitt 52 des Sensorbolzens 48 ersichtlich. Alternativ dazu kann eine nicht dargestellte geeignete Leitkontur oder ein gleichfalls nicht eingezeichnetes Prallblech am Druckmittelzufuhrflansch 34 vorgesehen sein.

### Bezugszeichen

- 10: Klauenkupplung
- 12: Feststehendes Kupplungsteil
- 14: Axial bewegliches Kupplungsteil
- 16: Innenverzahnung am feststehenden Kupplungsteil
- 18: Außenverzahnung am beweglichen Kupplungsteil
- 20: Zylindergehäuse
- 22: Topfförmiger Kolben
- 24: Gemeinsame Längsmittenachse
- 26: Kolbenbolzen
- 28: Erstes Langloch im Zylindergehäuse
- 30: Zweites Langloch im Zylindergehäuse
- 31: Außenaxialverzahnung am Zylindergehäuses
- 32: Hohlzylindrischer Endabschnitt des Zylindergehäuses
- 33: Innenaxialverzahnung am axial beweglichen Kupplungsteil
- 34: Druckmittelzufuhrflansch
- 36: Führungsbohrung im Druckmittelzufuhrflansch
- 38: Zufuhrkanal
- 40: Druckmittel
- 42: Schulter in der Führungsbohrung
- 44: Hülse
- 46: Lagerabschnitt am Sensorbolzen
- 48: Sensorbolzen
- 50: Befestigungsabschnitt am Sensorbolzen
- 52: Sensorabschnitt am Sensorbolzen
- 54: Verbindungsabschnitt am Sensorbolzen
- 56: Kolbenausnehmung
- 58: Dichtelement am Kolben, O-Ring
- 60: Zylinderraum
- 62: Automatisches bzw. automatisiertes Getriebe
- 64: Wirksame Druckfläche am Kolben
- 65: Wirksame Druckfläche am Sensorbolzen
- 66: Anschlusskanal
- 68: Getriebegehäusewand
- 70: Positionssensor
- 71: Längsmittenachse des Positionssensors
- 72: Schraubbolzen
- 74: Ausnehmung am Sensorabschnitt des Sensorbolzens
- 76: Abstand zwischen Sensorabschnitt und Sensor
- 78: Freies axiales Ende des Sensorbolzens
- 80: Abflachung am freien Ende des Sensorbolzens
- 82: Querbohrung im Befestigungsabschnitt des Sensorbolzens
- 83: Querbohrung im Kolben
- 84: Kolbenseitiges Ende des Sensorbolzens
- 86: Einführschräge am kolbenseitigen Ende des Sensorbolzens
- 88: Offenes Ende des Kolbens
- 90: Einführschräge am offenen Ende des Kolbens
- 92: Zusatzraum
- 94: Dichtelement am Positionssensor, O-Ring
- 96: Erster Pfeil
- 98: Druckfeder
- 100: Außenfläche des Kolbens
- 102: Erster Abschnitt einer V-förmigen Ausnehmung am Sensorbolzen
- 104: Zweiter Abschnitt einer V-förmigen Ausnehmung am Sensorbolzen
- 106: Basis der V-förmigen Ausnehmung am Sensorbolzen
- 110: Kupplungsweg
- 112: Bauteil des Getriebes
- 114: Zweiter Pfeil
- 116: Innenaxialverzahnung des Bauteils 112
- α: Anstellwinkel des Zufuhrkanals 38
- β: Anstellwinkel des Positionssensors

## Patentansprüche

1. Klauenkupplung (10) mit einem axial feststehenden Kupplungsteil (12) und einem axial beweglichen Kupplungsteil (14), bei welcher das axial feststehende Kupplungsteil (12) sowie das axial bewegliche Kupplungsteil (14) hülsenförmig ausgebildet sowie koaxial zueinander angeordnet sind, bei welcher das axial bewegliche Kupplungsteil (14) zum Herstellen einer formschlüssigen Verbindung mit dem axial feststehenden Kupplungsteil (12) mittels eines druckmittelbetätigbaren Kolbens (22) axial verschiebbar ist, bei welcher der Kolben (22) längsverschieblich in einem Zylindergehäuse (20) angeordnet ist, welches radial außen das axial bewegliche Kupplungsteil (14) trägt, bei welcher der Kolben (22) über einen Kolbenbolzen (26) mit dem axial beweglichen Kupplungsteil (14) verbunden ist, und bei welcher dem Zylinderraum (60) des Zylindergehäuses (20) über einen Zufuhrkanal (38) ein Druckmittel (40) zuführbar ist,
**dadurch gekennzeichnet, dass**
der Kolben (22) an einem axialen Ende mit einem koaxial ausgerichteten Sensorbolzen (48) fest verbunden ist, und der Sensorbolzen (48) im Bereich seines freien, kolbenfernen axialen Endes (78) an einem Sensorabschnitt (52) als Geberelement für einen Positionssensor (70) ausgebildet ist.

2. Klauenkupplung nach Anspruch 1, **dadurch gekennzeichnet, dass** der Kolben (22) rotationssymmetrisch um seine Längsmittenachse (24) eine topfförmige Kolbenausnehmung (56) aufweist, dass in der Kolbenausnehmung (56) ein Befestigungsabschnitt (50) des Sensorbolzens (48) angeordnet ist, dass der Kolben (22) im Bereich der Kolbenausnehmung (56) eine radiale Querbohrung (83) sowie der Befestigungsabschnitt (50) des Sensorbolzens (48) eine radiale Querbohrungen (82) aufweisen, die koaxial zueinander sowie senkrecht zur Längsmittenachse (24) ausgerichtet sind, und dass der Kolben (22), der Sensorbolzen (48) und das axial bewegliche Kupplungsteil (14) durch den Kolbenbolzen (26) miteinander verbunden sind, indem der Kolbenbolzen (26) in die radialen Querbohrungen (82, 83) eingesteckt und mit dem axial beweglichen Kupplungsteil (14) verbunden ist.

3. Klauenkupplung nach Anspruch 1 oder 2, **dadurch gekennzeichnet, dass** der Positionssensor (70) und der Sensorabschnitt (52) des Sensorbolzens (48) derart ausgebildet sowie zueinander angeordnet sind, dass die jeweilige Axialposition des kolbenfernen axialen Endes (78) des Sensorbolzens (48) und damit indirekt die axiale Position des Kolbens (22) sowie des axial beweglichen Kupplungsteils (14) stufenlos messbar sind.

4. Klauenkupplung nach einem der vorherigen Ansprüche, **dadurch gekennzeichnet, dass** der Sensorabschnitt (52) des Sensorbolzens (48) eine geometrisch von einer Zylindermantelfläche abweichende Geometrie aufweist, derart, dass der Abstand (76) zwischen dem Sensor (70) und dem Sensorabschnitt (52) des Sensorbolzens (48) in Abhängigkeit von der jeweiligen Axialposition des Sensorbolzens (48) unterschiedlich ist.

5. Klauenkupplung nach Anspruch 4, **dadurch gekennzeichnet, dass** der Sensorabschnitt (52) des Sensorbolzens (48) als eine umlaufende, im Längsschnitt V-nutförmige Ausnehmung (74) ausgebildet ist.

6. Klauenkupplung nach einem der vorherigen Ansprüche, **dadurch gekennzeichnet, dass** der Befestigungsabschnitt (50) des Kolbens (22) mittels eines Dichtelements (58) gegenüber der Kolbenausnehmung (56) abgedichtet ist.

7. Klauenkupplung nach einem der vorherigen Ansprüche, **dadurch gekennzeichnet, dass** das Zylindergehäuse (20) fest mit einem Druckmittelzufuhrflansch (34) verbunden oder mit diesem einstückig ausgebildet ist, und dass ein zylindrischer Lagerabschnitt (46) des Sensorbolzens (48) in einer Führungsbohrung (36) des Druckmittelzufuhrflansches (34) längsverschieblich aufgenommen ist.

8. Klauenkupplung nach Anspruch 7, **dadurch gekennzeichnet, dass** in die Führungsbohrung (36) eine Hülse (44) eingesetzt ist, welche an einer Schulter (42) der Führungsbohrung (36) des Druckmittelzufuhrflansches (34) axial anliegt, und dass der Lagerabschnitt (46) des Sensorbolzens (48) in der Hülse (44) aufgenommen ist.

9. Klauenkupplung nach Anspruch 7, **dadurch gekennzeichnet, dass** der Lagerabschnitt (46) des Sensorbolzens (48) längsverschieblich in der Führungsbohrung (36) aufgenommen ist, und dass dieser Lagerabschnitt (46) zumindest bereichsweise mit einem reibungsarmen Material versehen ist.

10. Klauenkupplung nach einem der vorherigen Ansprüche, **dadurch gekennzeichnet, dass** der Befestigungsabschnitt (50) und der Lagerabschnitt (46) des Sensorbolzens (48) durch einen zylindrischen Verbindungsabschnitt (54) mit reduziertem Durchmesser miteinander verbunden sind.

11. Klauenkupplung nach einem der Ansprüche 7 bis 10, **dadurch gekennzeichnet, dass** der Zufuhrkanal (38) im Druckmittelzufuhrflansch (34) zumindest abschnittweise unter einem Winkel (α) geneigt zu einer gemeinsamen Längsmittenachse (24) von Kolben (22) und Sensorbolzen (48) verläuft sowie tangential in die Führungsbohrung (36) einmündet.

12. Klauenkupplung nach einem der Ansprüche 7 bis 11, **dadurch gekennzeichnet, dass** der Druckmittelzufuhrflansch (34) mit einer Getriebegehäusewand (68) druckdicht verbunden ist.

13. Klauenkupplung nach einem der Ansprüche 1 bis 12, **dadurch gekennzeichnet, dass** der Positionssensor (70) im Bereich der Getriebegehäusewand (68) sowie radial oberhalb des Sensorabschnitts (52) des Sensorbolzens (48) angeordnet ist, wobei die Längsmittenachse (71) des Positionssensors (70) unter einem Anstellwinkel β von 30° bis zu 90° zur gemeinsamen Längsmittenachse (24) des Sensorbolzens (48) und des Kolbens (22) verläuft.

14. Klauenkupplung nach einem der Ansprüche 1 bis 13, **dadurch gekennzeichnet, dass** in der Getriebegehäusewand (68) zentrisch zur gemeinsamen Längsmittenachse (24) von Sensorbolzen (48) und Kolben (22) ein topfförmiger und an die Führungsbohrung (36) anschließender Zusatzraum (92) ausgebildet ist, in welches der Sensorabschnitt (52) des Sensorbolzens (48) teilweise hineinragt.

15. Klauenkupplung nach einem der Ansprüche 1 bis 14, **dadurch gekennzeichnet, dass** der Sensorbolzen (48) an seinem freien axialen Ende (78) Abflachungen (80) aufweist.

16. Klauenkupplung nach einem der Ansprüche 1 bis 15, **dadurch gekennzeichnet, dass** der Befestigungsabschnitt (50) des Sensorbolzens (48) an seinem kolbenseitigen Ende (84) eine Einführschräge (86) aufweist.

17. Klauenkupplung nach einem der Ansprüche 1 bis 16, **dadurch gekennzeichnet, dass** der Zufuhrkanal (38) im Druckmittelzufuhrflansch (34) mit einem peripheren Anschlusskanal (66) in der Getriebegehäusewand (68) verbunden ist.

## Claims

1. Dog clutch (10) having an axially fixed coupling part (12) and an axially movable coupling part (14), in which the axially fixed coupling part (12) and the axially movable coupling part (14) are designed to be sleeve-shaped are and arranged coaxially relative to each other, in which the axially movable coupling part (14) can be displaced axially via means of a pressure medium-actuated piston (22) in order to produce a form-fitting connection to the axially fixed coupling part (12), in which the piston (22) is longitudinally displaceably arranged in a cylinder housing (20) which carries the axially movable coupling part (14) radially on the outside, in which the piston (22) is connected to the axially movable coupling part (40) via a piston pin (26), and in which a pressure medium (40) can be fed to the cylinder chamber (60) of the cylinder housing (20) via a feed channel (38),
**characterized in that**
the piston (22) is firmly connected at one axial end to a co-axially aligned sensor bolt (48) and, on a sensor section (52) in the region of its free axial end (78) remote from the piston, the sensor bolt (48) is formed as a transmitter element for a position sensor (70).

2. Dog clutch according to Claim 1, **characterized in that** the piston (22) has a pot-shaped piston recess (56) rotationally symmetrically about its longitudinal central axis (24), **in that** a fastening section (50) of the sensor bolt (48) is arranged in the piston recess (56), **in that** the piston (22) has a radial transverse bore (83) in the region of the piston recess (56), and the fastening section (50) of the sensor bolt (48) has a radial transverse bore (82), which are aligned coaxially relative to each other and at right angles to the longitudinal central axis (24), and **in that** the piston (22), the sensor bolt (48) and the axially movable coupling part (14) are connected to one another by the piston pin (26), by the piston pin (26) being inserted into the radial transverse bores (82, 83) and connected to the axially movable coupling part (14).

3. Dog clutch according to Claim 1 or 2, **characterized in that** the position sensor (70) and the sensor section (52) of the sensor bolt (48) are formed and arranged relative to each other in such a way that the respective axial position of the axial end (78) of the sensor bolt (48) that is remote from the piston, and therefore indirectly the axial position of the piston (22) and of the axially movable coupling part (14), can be measured continuously.

4. Dog clutch according to one of the preceding claims, **characterized in that** the sensor section (52) of the sensor bolt (48) has a geometry differing geometrically from a cylinder circumferential surface in such a way that the distance (76) between the sensor (70) and the sensor section (52) of the sensor bolt (48) is different, depending on the respective axial position of the sensor bolt (48).

5. Dog clutch according to Claim 4, **characterized in that** the sensor section (52) of the sensor bolt (48) is formed as a circumferential recess (74) shaped like a V-groove in the longitudinal section.

6. Dog clutch according to one of the preceding claims, **characterized in that** the fastening section (50) of the piston (22) is sealed off relative to the piston recess (56) by means of a sealing element (58).

7. Dog clutch according to one of the preceding claims, **characterized in that** the cylinder housing (20) is firmly connected to a pressure-medium feed flange (34) or is formed in one piece with the latter, and **in that** a cylindrical bearing section (46) of the sensor bolt (48) is held longitudinally displaceably in a guide bore (36) of the pressure-medium feed flange (34).

8. Dog clutch according to Claim 7, **characterized in that** a sleeve (44) which rests axially on a shoulder (42) of the guide bore (36) of the pressure-medium feed flange (34) is inserted into the guide bore (36), and **in that** the bearing section (46) of the sensor bolt (48) is held in the sleeve (44).

9. Dog clutch according to Claim 7, **characterized in that** the bearing section (46) of the sensor bolt (48) is held longitudinally displaceably in the guide bore (36), and **in that** this bearing section (46) is at least partly provided with a low-friction material.

10. Dog clutch according to one of the preceding claims, **characterized in that** the fastening section (50) and the bearing section (46) of the sensor bolt (48) are connected to each other by a cylindrical connecting section (54) with reduced diameter.

11. Dog clutch according to one of Claims 7 to 10, **characterized in that** the feed channel (38) in the pressure-medium feed flange (34) extends so as to be at least partly inclined at an angle (α) to a common longitudinal central axis (24) of piston (22) and sensor bolt (48) and opens tangentially into the guide bore (36).

12. Dog clutch according to one of Claims 7 to 11, **characterized in that** the pressure-medium feed flange (34) is connected in a pressure-tight manner to a gearbox housing wall (68).

13. Dog clutch according to one of Claims 1 to 12, **characterized in that** the position sensor (70) is arranged in the region of the gearbox housing wall (68) and radially above the sensor section (52) of the sensor bolt (48), wherein the longitudinal central axis (71) of the position sensor (70) runs at an angle β of 30° to 90° relative to the common longitudinal central axis (24) of the sensor bolt (48) and of the piston (22).

14. Dog clutch according to one of Claims 1 to 13, **characterized in that** a pot-shaped additional chamber (92) which adjoins the guide bore (36) and into which the sensor section (52) of the sensor piston (48) partly projects is formed in the gearbox housing wall (68), centrally relative to the common longitudinal central axis (24) of sensor bolt (48) and piston (22).

15. Dog clutch according to one of Claims 1 to 14, **characterized in that** the sensor bolt (48) has flattened portions (80) on its free axial end (78) .

16. Dog clutch according to one of Claims 1 to 15, **characterized in that** the fastening section (50) of the sensor bolt (48) has an insertion bevel (86) at its end (84) on the piston side.

17. Dog clutch according to one of Claims 1 to 16, **characterized in that** the feed channel (38) in the pressure-medium feed flange (34) is connected to a peripheral connection channel (66) in the gearbox housing wall (68).

## Revendications

1. Embrayage à griffes (10) comprenant une partie d'embrayage (12) axialement fixe et une partie d'embrayage (14) axialement mobile, dans lequel la partie d'embrayage (12) axialement fixe ainsi que la partie d'embrayage (14) axialement mobiles sont réalisées en forme de douille et sont disposées de manière coaxiale l'une par rapport à l'autre, dans lequel la partie d'embrayage (14) axialement mobile peut être déplacée axialement au moyen d'un piston (22) pouvant être actionné par un fluide sous pression afin de réaliser une liaison par complémentarité de forme avec la partie d'embrayage (12) axialement fixe, dans lequel le piston (22) est disposé de manière mobile longitudinalement dans un corps de cylindre (20), lequel supporte radialement à l'extérieur la partie d'embrayage (14) axialement mobile, dans lequel le piston (22) est relié à la partie d'embrayage (14) axialement mobile par le biais d'un axe de piston (26), et dans lequel un fluide sous pression (40) peut être acheminé jusqu'à la chambre cylindrique (60) du corps de cylindre (20) par le biais d'un conduit d'alimentation (38), **caractérisé en ce que**
le piston (22) est, à une extrémité axiale, relié solidement à une goupille de détection (48) orientée de manière coaxiale, et la goupille de détection (48) est, dans la région de son extrémité axiale (78) libre éloignée du piston, réalisée en tant qu'élément transmetteur pour un capteur de position (70) au niveau d'une partie de détection (52).

2. Embrayage à griffes selon la revendication 1, **caractérisé en ce que** le piston (22) comprend un évidement de piston (56) en forme de pot présentant une symétrie de révolution autour de son axe médian longitudinal (24), **en ce qu'**une partie de fixation (50) de la goupille de détection (48) est disposée dans l'évidement de piston (56), **en ce que** le piston (22) comprend un alésage transversal radial (83) dans la région de l'évidement de piston (56) et la partie de fixation (50) de la goupille de détection (48) comprend un alésages transversaux radiaux (82), lesquels alésages sont orientés de manière coaxiale l'un par rapport à l'autre et perpendiculairement à l'axe médian longitudinal (24), et **en ce que** le piston (22), la goupille de détection (48) et la partie d'embrayage (14) axialement mobiles sont reliés les uns aux autres par le biais de l'axe de piston (26), par le fait que l'axe de piston (26) est enfiché dans les alésages transversaux radiaux (82, 83) et relié à la partie d'embrayage (14) axialement mobile.

3. Embrayage à griffes selon la revendication 1 ou 2, **caractérisé en ce que** le capteur de position (70) et la partie de détection (52) de la goupille de détection (48) sont réalisés et disposés l'un par rapport à l'autre de telle sorte que la position axiale respective de l'extrémité axiale (78), éloignée du piston, de la goupille de détection (48) et par conséquent indirectement la position axiale du piston (22) ainsi que de la partie d'embrayage (14) axialement mobile peuvent être mesurées en continu.

4. Embrayage à griffes selon l'une quelconque des revendications précédentes, **caractérisé en ce que** la partie de détection (52) de la goupille de détection (48) présente une géométrie différant géométriquement d'une surface d'enveloppe cylindrique, de telle sorte que la distance (76) entre le capteur (70) et la partie de détection (52) de la goupille de détection (48) soit différente en fonction de la position axiale respective de la goupille de détection (48).

5. Embrayage à griffes selon la revendication 4, **caractérisé en ce que** la partie de détection (52) de la goupille de détection (48) est réalisée sous la forme d'un évidement (74) périphérique en forme de rainure en V en coupe longitudinale.

6. Embrayage à griffes selon l'une quelconque des revendications précédentes, **caractérisé en ce que** la partie de fixation (50) du piston (22) est rendue étanche vis-à-vis de l'évidement de piston (56) au moyen d'un élément d'étanchéité (58).

7. Embrayage à griffes selon l'une quelconque des revendications précédentes, **caractérisé en ce que** le corps de cylindre (20) est relié solidement à une bride d'alimentation en fluide sous pression (34) ou est réalisé d'une seule pièce avec celle-ci, et **en ce qu'**une partie de palier cylindrique (46) de la goupille de détection (48) est reçue de manière mobile longitudinalement dans un alésage de guidage (36) de la bride d'alimentation en fluide sous pression (34).

8. Embrayage à griffes selon la revendication 7, **caractérisé en ce qu'**une douille (44) est insérée dans l'alésage de guidage (36), laquelle s'appuie axialement contre un épaulement (42) de l'alésage de guidage (36) de la bride d'alimentation en fluide sous pression (34), et **en ce que** la partie de palier (46) de la goupille de détection (48) est reçue dans la douille (44).

9. Embrayage à griffes selon la revendication 7, **caractérisé en ce que** la partie de palier (46) de la goupille de détection (48) est reçue de manière mobile longitudinalement dans l'alésage de guidage (36), et **en ce que** cette partie de palier (46) est dotée, au moins par endroits, d'un matériau à faible friction.

10. Embrayage à griffes selon l'une quelconque des revendications précédentes, **caractérisé en ce que** la partie de fixation (50) et la partie de palier (46) de la goupille de détection (48) sont reliées l'une à l'autre par une partie de liaison cylindrique (54) de diamètre réduit.

11. Embrayage à griffes selon l'une quelconque des revendications 7 à 10, **caractérisé en ce que** le conduit d'alimentation (38) s'étend dans la bride d'alimentation en fluide sous pression (34) de manière inclinée au moins dans certaines régions suivant un angle (α) par rapport à un axe médian longitudinal commun (24) du piston (22) et de la goupille de détection (48) et débouche tangentiellement dans l'alésage de guidage (36).

12. Embrayage à griffes selon l'une quelconque des revendications 7 à 11, **caractérisé en ce que** la bride d'alimentation en fluide sous pression (34) est reliée, de manière étanche à la pression, à une paroi de carter de transmission (68).

13. Embrayage à griffes selon l'une quelconque des revendications 1 à 12, **caractérisé en ce que** le capteur de position (70) est disposé dans la région de la paroi de carter de transmission (68) ainsi que radialement au-dessus de la partie de détection (52) de la goupille de détection (48), l'axe médian longitudinal (71) du capteur de position (70) s'étendant suivant un angle d'inclinaison β de 30° à 90° par rapport à l'axe médian longitudinal commun (24) de la goupille de détection (48) et du piston (22) .

14. Embrayage à griffes selon l'une quelconque des revendications 1 à 13, **caractérisé en ce qu'**une chambre supplémentaire (92) en forme de pot et se raccordant à l'alésage de guidage (36) est réalisée dans la paroi de carter de transmission (68) de manière centrée par rapport à l'axe médian longitudinal commun (24) de la goupille de détection (48) et du piston (22), chambre supplémentaire dans laquelle la partie de détection (52) de la goupille de détection (48) pénètre partiellement.

15. Embrayage à griffes selon l'une quelconque des revendications 1 à 14, **caractérisé en ce que** la goupille de détection (48) comprend, à son extrémité axiale libre (78), des aplatissements (80).

16. Embrayage à griffes selon l'une quelconque des revendications 1 à 15, **caractérisé en ce que** la partie de fixation (50) de la goupille de détection (48) comprend, à son extrémité (84) côté piston, un biseau d'insertion (86).

17. Embrayage à griffes selon l'une quelconque des revendications 1 à 16, **caractérisé en ce que** le conduit d'alimentation (38) dans la bride d'alimentation en fluide sous pression (34) est relié à un conduit de raccordement périphérique (66) dans la paroi de carter de transmission (68).
